# EUROPEAN PATENT APPLICATION

(11) **EP 2 693 247 A1**
(43) Date of publication of application: **05.02.2014**
(21) Application number: 13179173.3
(22) Date of filing: 02.08.2013
(51) Int. Cl.: G02B 7/04, G02B 7/10

(54) **Mechanism for moving optical element**

(30) Priority: 02.08.2012 JP 2012171668
(71) Applicant: Tamron Co., Ltd., Saitama-shi Saitama 337-8556 (JP)
(72) Inventor: Toma, Yusuke, Saitama, 337-8556 (JP)
(74) Representative: Henkel, Breuer & Partner

(57) **Abstract**

An object of the present invention is to improve control accuracy of the movement of an optical element by increasing rotation angle of cam pins that move in a cam groove with a simple construction. To achieve the object, a plurality of cam pins (13A, 13B, 13C) are attached radially on an outer periphery of a frame (10) for holding the optical element at the positions (11A, 11B, 11C) displaced against each other in the optical axis (L) direction. Further, a cam pipe (20) through which the frame (10) is inserted has a plurality of cam grooves (21) for gearing with the corresponding cam pins formed in the manner in which a groove track extends long along the peripheral direction of the cam pipe (20) in parallel; and some portion of groove tracks of the adjacent ones in cam grooves (21) are arranged side-by-side.

## Description

### BACKGROUND OF THE INVENTION

### Field of the Invention

The present invention relates to a mechanism for moving an optical element that moves an optical element such as a lens along an optical axis by rotation of a cam pipe about the optical axis.

### Background Art

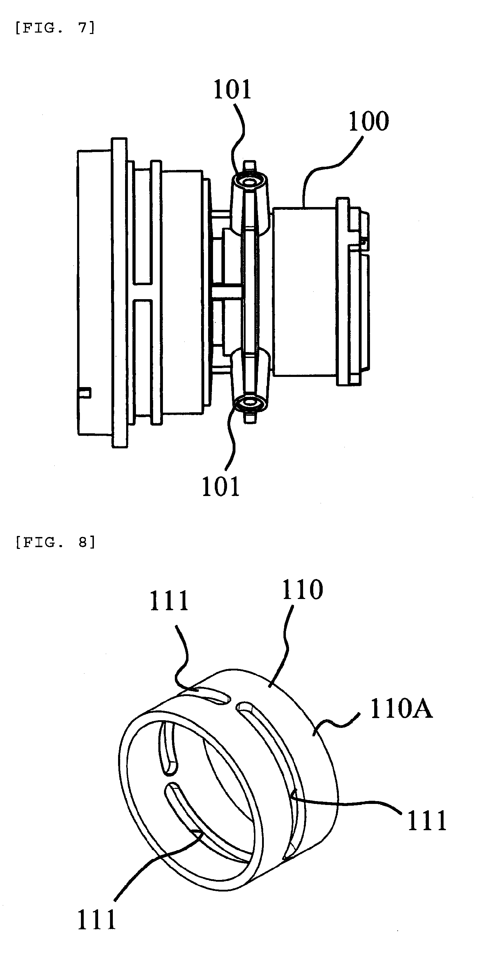

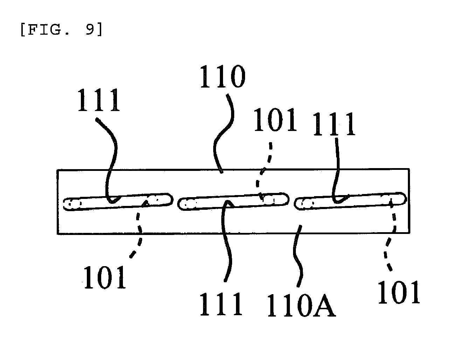

A lens barrel constituting an imaging device employs a mechanism for moving an optical element such as a focusing lens and a zooming lens along the optical axis direction. One example of conventional mechanisms for moving the lens will be demonstrated with reference to FIG. 7 to FIG. 9. FIG. 7 is a side view of a frame 100, FIG. 8 is a perspective view of a cam pipe 110, and FIG. 9 is a developed side view of the cam pipe 110. Each of FIG. 7 to FIG. 9 is the view from the object side.

The frame 100 and the cam pipe 110 are each cylindrical. The frame 100 holds a focusing lens (not shown) inside. As shown in FIG. 7, the outer periphery of the frame 100 is attached a plurality of cam pins 101. The cam pins 101 are attached radial about the optical axis in the same plane perpendicular to the optical axis of the lens. In the example employing a so-called single cam driving system with three-point suspension, three cam pins 101 are attached at angle interval of 120° around an optical axis L on the same plane perpendicularly intersects the optical axis of the lens in order to stably hold the lens,.

Then, the cam grooves 111 correspond to the cam pins 101 attached on the frame 100 are formed along the periphery 110A of the cam pipe 110. The cam grooves 111 are each formed along the periphery 110A of the cam pipe 110 to extend along a straight line inclined from one side to another side in the optical axis. The inclination angle of the cam grooves 111 adjusts moving distance of the frame.

Further, a rectilinear cylinder (not shown) formed in cylindrical shape is arranged between the frame 100 and the cam pipe 110. The rectilinear cylinder has a rectilinear guide groove open along the optical axis direction of the lens.

In the assembled frame 100, cam pipe 110 and rectilinear cylinder, the frame 100 moves along the optical axis L direction when the cam pipe 110 rotates about the optical axis L because cam pins 101 attached on the frame 100 move along cam grooves 111 formed in the cam pipe 110 and is restricted rotation about the optical axis L by the rectilinear guide grooves formed in the rectilinear cylinder.

However, when the above-mentioned single cam driving system with three-point suspension is employed, the cam grooves 111 corresponding to the cam pins 101 should be formed at the same position in view from the direction orthogonal to the optical axis L.

Consequently, the cam grooves 111 should not connect with each other for smooth moving of the cam pins 101 in the cam grooves 111. For this reason, each of cam grooves 111 must be in a intersect angle range of 80° to 110° in view from the optical axis direction defined by two straight lines crossing the optical axis, one extending from one end portion in a cam groove 111 and the other extending from another end portion in the cam groove 111. However, the above-mentioned angle range of the cam groove 111 cannot secure enough rotation angle range of the focusing lens held by the frame 100.

Then, Patent Document 1, Japanese Patent Laid-Open No. 2004-85709 relating to "a lens barrel and a surveillance camera" discloses a cam groove formed to have a large inclination angle at an end portion in a focusing ring along the optical axis direction. By the way, the invention disclosed in Patent Document 1 prevents rotation of the focusing ring against fixed barrel by a lock screw and a lock plate provided. However, the invention secures certain range of rotation angle in the focusing lens.

Next, Patent Document 2, Japanese Patent Laid-Open No. 09-189844 discloses a mechanism provided with cam grooves for focusing adjustment and magnification change on the inner periphery of an intermediate barrel. Further, the mechanism have cam pins attached to gear with the cam groove for focusing adjustment and the cam pins attached to gear with the cam groove for magnification change at the lens holder side.

Phase between the cam grooves for focusing adjustment and magnification change shifts 60° against the rotation angle of the intermediate barrel, and the cam pins corresponding to the cam grooves for focusing adjustment and magnification change provides an angle interval of 60° around the optical axis in slightly displaced manner along the optical axis direction.

As the construction disclosed in Patent Document 1 adopts the cam groove having a large inclination angle to the end portion in the focusing ring along the optical axis direction, a rotation angle range may secure approximately 120° for the focusing ring, but the moving distance of the lens along the optical axis direction per unit rotation angle is large, i.e. the construction is not suitable for the case where the moving distance of the lens along the optical axis direction is small.

Then, speed reduction by using a double helicoid system, a two-stage cam system and the like have been employed for lens position adjustment in order to secure a large rotation angle range for the cam pipe 110 even when the moving distance of the lens along the optical axis direction is small. However, as these constructions causes a drawback of large backlash, appropriate lens position adjustment is difficult. Further, because of increased number of parts and complicated assembling work, production cost increases.

The invention disclosed in Patent Document 2 performs focusing adjustment and magnification change by cam pins move in the cam grooves for focusing adjustment and magnification change through rotation control along the optical axis direction. However, the intermediate barrel cannot stably hold the lens holder because the cam grooves and the cam pins attached have an angle interval of 60° around the optical axis. In particular, because purposes of the cam grooves for focusing adjustment and magnification change are different, both cam pins not always stably held in the cam grooves result one-point suspension, and the state may cause out-of-focus problem.

### BRIEF DESCRIPTION OF THE DRAWINGS

FIG. 1 is a longitudinal cross-sectional view of a lens barrel including a mechanism for moving an optical element according to the present invention;
FIG. 2 is a side view of a frame;
FIG. 3 is a perspective view of a cam pipe;
FIG. 4 is a developed side view of the cam pipe;
FIG. 5 is a side view of a rectilinear cylinder;
FIG. 6 is a cross-sectional view of the rectilinear
   cylinder;
FIG. 7 is a side view of a frame of a conventional mechanism for moving optical element;
FIG. 8 is a perspective view of a cam pipe of the conventional mechanism for moving optical
   element; and
FIG. 9 is a developed side view of the cam pipe of the conventional mechanism for moving optical element.

### SUMMARY OF THE INVENTION

After intensive studies, the present inventors thought out the mechanism for moving an optical element according to the present invention that improves control accuracy in the movement of an optical element by making rotation angle of cam pins that move in a cam groove wider with a simple construction. Hereinafter, a mechanism for moving an optical element, a lens barrel, and an imaging device will be demonstrated one by one.

### <Mechanism for moving the optical element according to the present invention>

A mechanism for moving the optical element according to the present invention includes: an optical element; a frame for holding the optical element and attached a plurality of cam pins on an outer periphery of the frame; and a cylindrical cam pipe in which the frame is inserted in the manner that a central axis of the cylindrical shape of the cam pipe is in the same direction as that of an optical axis, and the frame slides along the optical axis by rotating the cam pipe about the optical axis. The cam pins are attached in radial on the outer periphery of the frame at the positions displaced against each other in the optical axis direction. The cam pipe has a plurality of cam grooves for gearing with the corresponding cam pins. A groove track of each cam groove extends along a peripheral direction of the cam pipe in parallel, and some portion of groove tracks of the adjacent ones in cam grooves are arranged side-by-side.

In the mechanism for moving the optical element according to the present invention, it is preferable that only one end portion in the groove track of each cam groove overlaps with another end portion in the groove track of the adjacent cam groove in the peripheral direction; and the overlapping portions are arranged in parallel and side-by-side.

In the mechanism for moving the optical element according to the present invention, it is preferable that displacement width between the positions of the adjacent cam pins is sum of a diameter of the cam pins and a necessary body thickness between the cam grooves or more.
Next, in the mechanism for moving the optical element according to the present invention, it is preferable that each of cam grooves in the cam pipe extends in a straight line and along the peripheral direction of the cam pipe.

In the mechanism for moving the optical element according to the present invention, it is preferable that; when the number of the cam pins is n; the intersect angle in view from the optical axis direction defined by two straight lines crossing the optical axis, one extending from one end portion in the cam groove and the other extending from another end portion in the cam groove is 360° / n or more.

In the mechanism for moving the optical element according to the present invention, it is preferable that: the frame includes three or more cam pins attached on the outer periphery; and the number of the cam grooves provided in the cam pipe corresponds to the number of the cam pins.

### <Lens barrel according to the present invention>

A lens barrel according to the present invention includes the above-mentioned mechanism for moving the optical element.

### <Imaging device according to the present invention>

An imaging device according to the present invention includes the above-mentioned mechanism for moving the optical element, and an imaging sensor.

### ADVANTAGES OF THE INVENTION

A mechanism for moving an optical element according to the present invention can make rotation angle of cam pins that move in cam grooves wider than rotation angle in conventional constructions. It is because of cam pins attached in radial on the outer periphery of the frame at the positions displaced against each other in the optical axis direction; each of cam grooves formed in the cam pipe extends along a peripheral direction; and some portion of groove tracks of the adjacent ones in cam grooves provided in parallel are arranged side-by-side. Consequently, the present invention makes accurate control of moving amount in an optical element possible by adjusting the rotation angle of the cam pipe. Further, because of the stably held frame achieved by the plurality of cam pins respectively housed and held in the corresponding cam grooves effectively prevent drawbacks including an out-of-focus problem.

In particular, the present invention performs the position adjustment of the optical element in high accuracy without increase in the number of parts as different from conventional systems including a double helicoid system and a two-stage cam system. Further, as the present invention can make the cam pipe long along the optical axis direction in a portion as a dead space of a lens barrel, the cam grooves corresponding to a technical feature of the present invention are provided therein. Consequently, the present invention achieves improved accuracy of lens position adjustment without drawback of increase in size of the lens barrel. That is, a lens barrel provided with the above-mentioned mechanism for moving the optical element and an imaging device including the above-described mechanism for moving the optical element and an imaging sensor can perform a high-quality lens movement controlling function.

### DETAILED DESCRIPTION OF THE PREFERRED EMBODIMENT

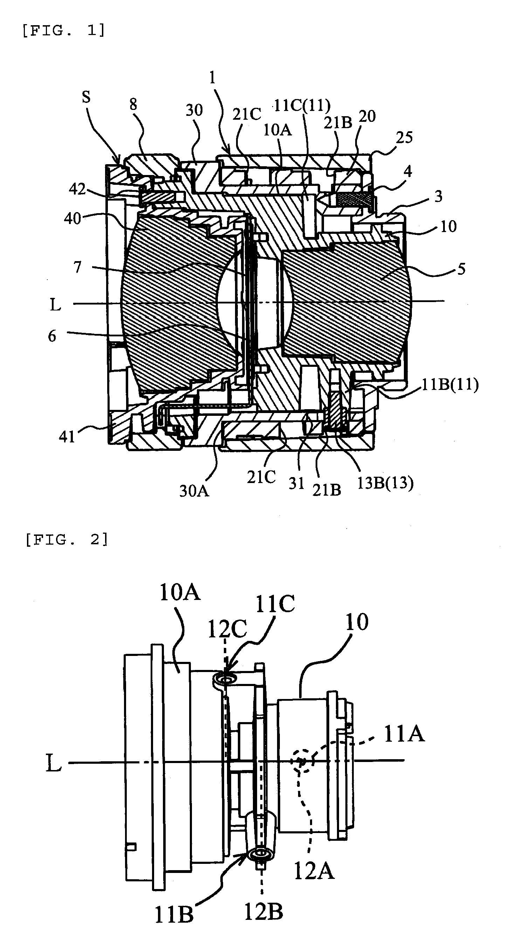

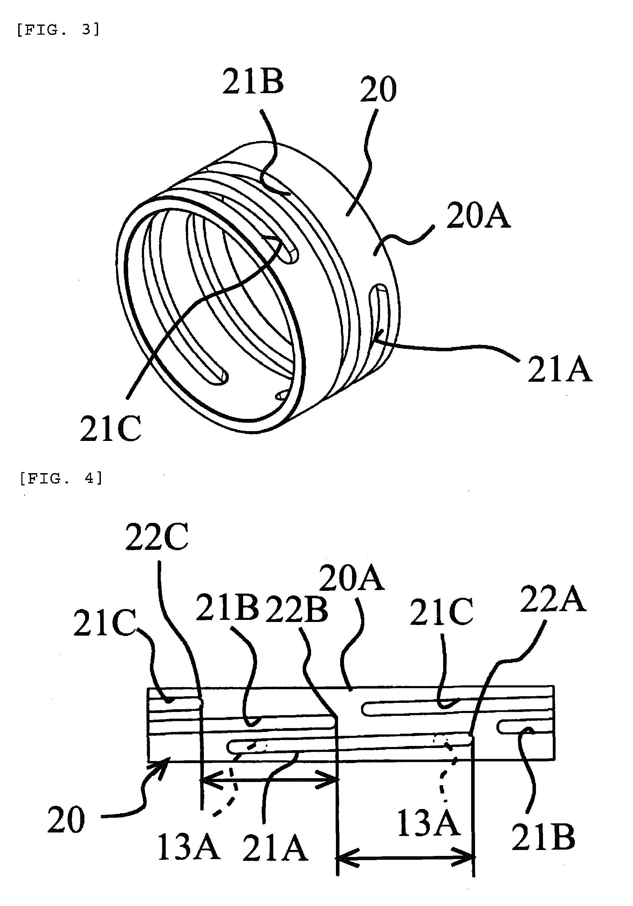

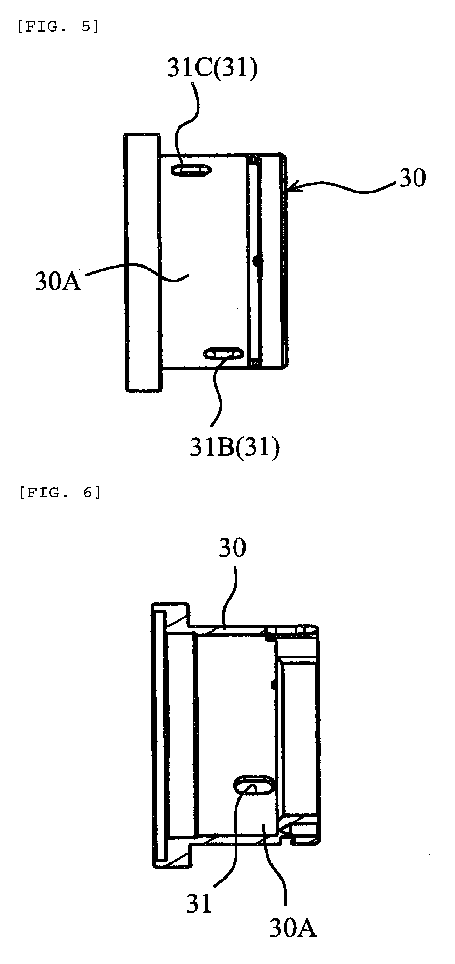

Hereinafter, a lens barrel S employing a mechanism for moving an optical element 1 according to the present invention will be demonstrated with reference to the drawings. FIG. 1 is a longitudinal cross-sectional view of the lens barrel S including the mechanism for moving the optical element 1 according to the present invention. FIG. 2 is a side view of the frame 10. FIG. 3 is a perspective view of the cam pipe 20. FIG. 4 is a developed side view of the cam pipe 20. FIG. 5 is a side view of the rectilinear cylinder 30. FIG. 6 is a cross-sectional view of the rectilinear cylinder 30. Each of FIG. 1 to FIG. 6 is viewed from an object side.

The lens barrel S of the present embodiment is used as attached to a camera main body provided with an imaging sensor, and includes the rectilinear cylinder 30 to be fixed to a camera main body and the mechanism for moving the optical element 1 according to the present invention.

The rectilinear cylinder 30 has a cylindrical shape, and will be unrotatably fixed to the camera mount 3 provided on the camera main body via the fixing member 4. The rectilinear cylinder 30 extending long along the optical axis L direction has the central axis common with the optical axis L of the lens (optical element) 5 to be described later. Note that, in the present application, the words "cylindrical shape" defines a concept including not only a tubular shape circular in cross-section but also a tubular shape elliptical in cross-section.

The mechanism for moving the optical element 1 according to the present invention includes the optical element, the frame 10 for holding the optical element, and the cam pipe 20 through which the frame 10 is provided.

The frame 10 has a cylindrical shape having an outer diameter to be housed in the inner periphery of the rectilinear cylinder 30. The inner periphery of the frame 10 holds the focusing lens 5 as the optical element. The focusing lens 5 is a lens system for focusing an object image and fixed to an inner periphery of the frame 10 to align the optical axis L.

Then, the frame 10 extending long along the optical axis L direction has central axis of the cylindrical shape of the frame 10 common with the optical axis L of the lens (optical element) 5 fixed on the inner periphery of the frame 10. The object side of the frame 10 holds the iris 6 and the shutter 7 both constitute the optical element. Note that the iris 6 can be adjusted by the iris operation ring (iris adjusting means) 8 that is rotatably provided on the outer periphery of the frame 10.

Further, the frame 10 fixes the lens frame 41 for holding the lens 40 by the fixing member 42 at the object side of the iris 6 and the shutter 7. The lens 40 arranged to have the optical axis common with the optical axis L of the focusing lens 5 can move along the optical axis L direction according to movement of the frame 10 along the optical axis L direction.

Note that, although the present embodiment exemplifies the focusing lens 5, the lens 40, the iris 6, and the shutter 7 as an optical element, the optical element is not limited to these and the words represents the concept including the other lens such as a zooming lens and filters. In addition to the lenses, the frame 10 can hold optical elements such as the iris 6, the shutter 7, and the filters, as a member constituting the mechanism for moving the optical element 1.

Next, an attaching structure of cam pins 13 attached on the frame 10 will be demonstrated with reference to the side view of the frame 10 in FIG. 2. The outer periphery 10A of the frame 10 includes a plurality of cam pin-attaching portions 11. The cam pin-attaching portions 11 are provided on the outer periphery 10A of the frame 10 radially about the optical axis L of the focusing lens 5. As described later, the cam pins 13 are attachable to the cam pin-attaching portions 11 from outside in the state where the frame 10 in the cam pipe 20 is provided through the rectilinear cylinder 30. In the present embodiment, as a so-called single cam driving system with three-point suspension is employed, three cam pin-attaching portions 11 are provided on the outer periphery 10A of the frame 10 at same angle interval (about 120°) around the optical axis L.

The cam pin-attaching portions 11 and the cam pins 13 attached to the cam pin-attaching portions 11 locate at the positions displaced against each other in the optical axis L direction in view from the direction orthogonal to the optical axis L. Here, 11A, 11B, and 11C denote the cam pin-attaching portions 11 in order from the imaging sensor side, and 13A, 13B, and 13C denote the cam pins 13 corresponding to the cam pin-attaching portions 11A, 11B, 11C in order from the imaging sensor side (only 13B is shown). Note that, a dotted line in FIG. 2 indicates the cam pin-attaching portion 11A closest to the imaging sensor which could not be directly shown in the side view.

The displacement width among the positions of the adjacent cam pin-attaching portions 11A, 11B, and 11C and the cam pins 13A, 13B, and 13C is sum of a diameter of the cam pins 13 and a necessary body thickness between the adjacent cam grooves 21 formed in the cam pipe 20 to be described later or more. With such a construction, central axis (virtual lines) 12A, 12B, and 12C of the cam pin-attaching portions 11A, 11B, and 11C and the cam pins 13A, 13B, and 13C orthogonal to the optical axis L intersect with the optical axis L at different positions (see FIG. 2).

Next, a construction of the cam pipe 20 will be demonstrated with reference to FIG. 3 and FIG. 4. The cam pipe 20 is made of metal or synthetic resin, and has a cylindrical shape having an inner diameter for housing the rectilinear cylinder 30 on the inner periphery of the cam pipe 20. Such as the rectilinear cylinder 30 and the frame 10, the cam pipe 20 extends long along the optical axis L direction to make the central axis of the cylindrical shape of the cam pipe 20 common with the optical axis L of the lens (optical element) 5 arranged on the inner periphery of the cam pipe 20. Consequently, when the cam pipe 20 houses the rectilinear cylinder 30 through the frame 10, the frame 10 indirectly houses the cam pipe 20 in the inner periphery.

The rotation of the cam pipe 20 can be adjusted by the focusing ring (cam pipe adjusting means) 25 that is rotatably provided on the outer periphery of the cam pipe 20. Note that the focusing ring 25 may control rotation manually or by driving means.

As shown in the perspective view in FIG. 3, the cam pipe 20 is provided with the plurality of cam grooves 21 corresponding to the cam pins 13 attached on the frame 10 along the periphery 20A. The groove track of each cam grooves 21 extends along the peripheral direction of the cam pipe 20. Specifically, each cam groove 21 is provided to have an inclination angle α to the peripheral direction of the cam pipe 20 of 0 < α <= 5°. As movement in the thrusting direction is 0 when the inclination angle α to the peripheral direction of the cam pipe 20 is 0°, the inclination angle α should exceed 0°. In contrast, as the inclination angle α to the peripheral direction of the cam pipe 20 of exceeding 5° can secure the sufficient body thickness between the adjacent cam grooves 21 (the distance between the adjacent cam grooves), an advantage achieved by attaching the cam pins 13 with a displacement at same interval around the optical axis L is lost. Then, the corresponding cam pins 11 gearing with each cam groove 21 are provided in the state slidably move in the groove.

In the present embodiment, three cam grooves 21 corresponding to three cam pins 13 attached on the frame 10 are formed in the cam pipe 20. Here, 21A, 21B, and 21C will denote the cam grooves 21 in order from the imaging sensor side.

As shown in FIG. 4, the cam grooves 21A to 21C open along the periphery 20A and extending in a straight line inclined from one direction (object side) to another direction (imaging sensor side) of the optical axis L are each formed in the cam pipe 20 in the present embodiment. The cam grooves 21A to 21C have the same width and the same intersect angle in view from the optical axis direction defined by two straight lines crossing the optical axis L, one extending from one end portion in the cam groove 21 and the other extending from another end portion in the cam groove 21.

Note that, the cam pin-attaching portions 11 and the cam pins 13 attached on the frame 10 locate at the positions displaced against each other in the optical axis L direction in view from the direction orthogonal to the optical axis L. Then, the cam grooves 21 formed corresponding to the cam pins 13 locate at the positions displaced against each other in the optical axis L direction in view from the direction orthogonal to the optical axis L, and in parallel. The displaced width of each cam groove 21 is determined depending on the arrangement position of the cam pins 13.

Further, as the cam pins 13 are attached at same angle interval in radial about the optical axis L, the cam grooves 21 also locate at same angle interval about the optical axis L. As a result, the cam grooves 21A to 21C locate such that some portion of groove tracks of the adjacent ones in cam grooves are arranged side-by-side as shown in FIG. 3 and FIG. 4.

Specifically, each cam groove 21 formed around the optical axis L extends from one end portion thereof at a position corresponding to a displaced position of each cam pins 13 to another end portion thereof. One end portion 22A of the cam groove 21A formed at the imaging sensor side and one end portion 22B of the cam groove 21B adjacent to the cam groove 21A locate at the positions displaced by the amount of displacement between the cam pins 13A and 13B. Also, the one end portion 22B of the cam groove 21B and one end portion 22C of the cam groove 21C formed on the object side locate at the positions displaced by the amount of displacement between the cam pins 13B and 13C. As a result, only one end portion in the groove track of each cam groove 21 overlaps with another end portion in the groove track of the cam groove adjacent to the cam groove 21 in the peripheral direction, and some portion of groove tracks of the adjacent ones in cam grooves are arranged side-by-side as shown in FIG. 3 and FIG. 4.

So, the cam grooves 21A to 21C never intersect or connect each other and the intersect angle in view from the optical axis direction defined by two straight lines crossing the optical axis L, one extending from one end portion in a cam groove 21 and the other extending from another end portion in the cam groove 21 can be 120° or more, 160° to 200° for example. Note that the shape of the cam groove 21 is not limited to the straight line, and may have, for example, a predetermined curvature shape.

Next, a shape of the rectilinear guide groove in the rectilinear cylinder 30 will be demonstrated in detail with reference to FIG. 5 and FIG. 6. The rectilinear cylinder 30 has a plurality of rectilinear guide grooves 31 along the periphery 30A corresponding to the cam pins 13 attached on the frame 10. Each rectilinear guide groove 31 opens along the optical axis L direction of the lens 5. The opening size of the rectilinear guide groove 31 along the optical axis L direction corresponds to the moving range of the cam pins 13 along the optical axis L direction.

In the present embodiment, the rectilinear cylinder 30 has three rectilinear guide grooves 31 corresponding to three cam pins 13 attached on the frame 10. Here, 31A, 31B, and 31C denote the rectilinear guide grooves 31 in order from the imaging sensor side.

According to the construction described above, assembling procedures of the mechanism for moving the optical element 1 and the rectilinear cylinder 30 will be demonstrated. At first in the assembling, the frame 10 holds the focusing lens 5 as the optical element. Also, the frame 10 may hold the iris 6 and the shutter 7 as the optical element. Then, the frame 10 is inserted in the inner periphery of the rectilinear cylinder 30. The rectilinear cylinder 30 through which the frame 10 has been inserted is further inserted in the inner periphery of the cam pipe 20.

After inserting the frame 10 and the rectilinear cylinder 30 through the cam pipe 20 at a housing position, align the cam pin-attaching portions 11A to 11C of the frame 10, the rectilinear guide grooves 31A to 31C in the rectilinear cylinder 30 and the cam grooves 21A to 21C in the cam pipe 20 each other. Then, the cam pins 13A to 13C are respectively attached from the outside of the cam pipe 20 to the cam pin-attaching portions 11A to 11C that are visible from the outside through the rectilinear guide grooves 31A to 31C and the cam grooves 21A to 21C. After that, the focusing ring 25 is attached to the outer periphery of the cam pipe 20. In this state, the rectilinear cylinder 30 will be fixed to the camera mount 3 via the fixing member 4.

Next, a movement of the lens 5 along the optical axis L direction will be described. In the housed state in FIG. 1, the cam pins 13A to 13C respectively locates at the object-side ends of the cam grooves 21A to 21C in the cam pipe 20 and at the object-side ends of the rectilinear guide grooves 21A to 21C in the rectilinear cylinder 30.

In this state, with the focusing ring 25 turns about the optical axis L in the clockwise direction in view from the imaging sensor side, the cam pipe 20 turns about the optical axis also. Consequently, the cam pins 13A to 13C (including cam pin-attaching portions 11A to 11C) attached through the cam grooves 21A to 21C slide in the cam grooves 21A to 21C and the frame 10 slides toward the imaging sensor side along the optical axis L. In this operation, the rectilinear guide grooves 31A to 31C restrict rotation about the optical axis L. In contrast, with the cam pipe 20 turns about the optical axis in the counterclockwise direction, the cam pins 13A to 13C slide in the cam grooves 21A to 21C to slide the frame 10 toward the object side along the optical axis L.

In the mechanism for moving the optical element 1 according to the present invention, the frame 10 is attached the cam pins 13A to 13C (including the cam pin-attaching portions 11A to 11C) in radial about the optical axis L and at the positions displaced against each other in the optical axis L direction on the outer periphery 10A. Further, the cam grooves 21A to 21C formed in the cam pipe 20 extend along almost the peripheral direction of the cam pipe 20 in parallel and the some portion of groove tracks of the adjacent ones in cam grooves 21A to 21C are arranged side-by-side.

Consequently, in the present embodiment where the cam pins 13 are three, the intersect angle in view from the optical axis direction defined by two straight lines crossing the optical axis, one extending from one end portion in a cam groove and the other extending from another end portion in the cam groove can be 120° or more. Then, the rotation angles of the cam pins 13A to 13C move in the cam grooves 21A to 21C significantly increases in comparison with the conventional constructions. Consequently, the present invention achieves highly accurate control in movement of the optical element such as the lens 5 by adjusting the rotation angle of the cam pipe 20.

In particular, the present invention achieves highly accurate position adjustment of the optical element such as the lens 5 without increased parts, as different from conventional methods including a double helicoid system and a two-stage cam system.

Further, in the present invention, as the cam pipe 20 is provided in the manner extending long along the optical axis L direction in a portion that might be a dead space in the lens barrel S, a technical feature of the present invention, arrangement of each cam grooves 21A to 21C is made possible. Consequently, the present invention achieves improved accuracy in lens position adjustment without drawback of increase in size of the lens barrel S.

Note that, the present embodiment described above employing a so-called single cam driving system with three-point suspension is attached three cam pins 13 (including three cam pin-attaching portions 11) on the frame 10 at same angle interval (about 120°) around the optical axis L. However, the number of the cam pins 13 (including cam pin-attaching portions 11) is not limited to three. For example, with the two-point suspension, the cam pins 13 (including cam pin-attaching portions 11) may be attached opposing to each other on the outer periphery 10A of the frame 10. The cam pins 13 attached at same angle interval around the optical axis L is also preferable even when attaching four or more cam pins 13 (including four or more cam pin-attaching portions 11) on the outer periphery of the frame 10.

The present embodiment having three or more cam pins 13 (including cam pin-attaching portions 11) attached on the outer periphery 10A of the frame 10 and the cam grooves 21 in the cam pipe 20 corresponding to cam pins 13 holds the frame 10 in three or more directions. Such construction achieves position adjustment along the optical axis L direction with stably held frame 10. Consequently, the present invention eliminates drawbacks including an out-of-focus problem more effectively.

Further, a plurality of the cam pins 13 (for example, n cam pins 13) attached on the outer periphery 10A of the frame 10 can make the intersect angle of the cam grooves 21 formed in the cam pipe 20 corresponding to the cam pins 13 in view from the optical axis 360° / n or more. Wherein the intersect angle is defined by two straight lines crossing the optical axis, one extending from one end portion in the cam groove 21 and the other extending from another end portion in the cam groove 21. For example, with the number of the cam pins 13 of two, the intersect angle in view from the optical axis direction may be 180° or more, and with the number of the cam pins 13 of four, the intersect angle may be 90° or more.

In any of these cases, the rotation angle of each cam pins 13 that moves in each cam groove 21 may significantly increase in comparison with conventional constructions. Then, adjustment of the rotation angle of the cam pipe 20 with the stable held frame achieves the highly accurate control in movement of the optical element such as the lens 5.

Application of the lens barrel S including the above-mentioned mechanism for moving the optical element 1 according to the present invention for an existing imaging device achieves a high-quality lens movement controlling function in the imaging device.

### INDUSTRIAL APPLICABILITY

As described above, a mechanism for moving an optical element according to the present invention is effectively used in a lens barrel that should accurately control movement of a frame for holding an optical element; and an imaging device including the lens barrel. It is because of increased angle about the optical axis in a cam groove formed in a cam pipe even when the moving distance of a lens along the optical axis direction is small.

## Claims

1. A mechanism for moving an optical element including:
an optical element;
a frame for holding the optical element and attached a plurality of cam pins on an outer periphery of the frame; and
a cylindrical cam pipe in which the frame is inserted in the manner that a central axis of the cylindrical shape of the cam pipe is in the same direction as that of an optical axis,
the frame slides along the optical axis by rotating the cam pipe about the optical axis, wherein
the cam pins are attached in radial on the outer periphery of the frame at the positions displaced against each other in the optical axis direction,
the cam pipe has a plurality of cam grooves for gearing with the corresponding cam pins, and
a groove track of each cam groove extend along peripheral direction of the cam pipe in parallel and some portion of groove tracks of the adjacent ones in cam grooves are arranged side-by-side.

2. The mechanism for moving the optical element according to claim 1, wherein
only one end portion in the groove track of each cam groove overlaps with another end portion in the groove track of the adjacent cam groove in the peripheral direction, and
the overlapping portion is arranged in parallel and side-by-side.

3. The mechanism for moving the optical element according to claim 1 or claim 2, wherein
a displacement width between the positions of the adjacent cam pins is sum of a diameter of the cam pin and a necessary body thickness between the cam grooves or more.

4. The mechanism for moving the optical element according to any of claim 1 to claim 3, wherein
each of cam grooves in the cam pipe extends in a straight line and along the peripheral direction of the cam pipe.

5. The mechanism for moving the optical element according to any of claim 1 to claim 4, wherein
when the number of the cam pins is n, an intersect angle in view from the optical axis direction defined by two straight lines crossing the optical axis, one extending from one end portion in the cam groove and the other extending from another end portion in the cam groove is 360° / n or more.

6. The mechanism for moving the optical element according to any of claim 1 to claim 5, wherein
the frame includes three or more cam pins attached on the outer periphery, and
a number of the cam grooves provided in the cam pipe corresponds to the number of the cam pins.

7. A lens barrel including the mechanism for moving the optical element according to any of claim 1 to claim 6.

8. An imaging device including:
the mechanism for moving the optical element according to any of claim 1 to claim 6, and
an image sensor.
